# EUROPÄISCHE PATENTSCHRIFT

(11) **EP 1 446 281 B1**
(45) Veröffentlichungstag und Bekanntmachung des Hinweises auf die Patenterteilung: **06.08.2008**
(21) Anmeldenummer: 02803369.4
(22) Anmeldetag: 14.11.2002
(51) Int. Cl.: B31F 1/28, B31F 5/00, B29C 65/08

(54) **VORRICHTUNG UND VERFAHREN ZUM ULTRASCHALLVERBINDEN EINER MEHRLAGIGEN MATERIALBAHN**
DEVICE AND METHOD FOR CONNECTING A MULTILAYERED WEB BY ULTRASOUND
SYSTÈME ET PROCÉDÉ POUR ASSEMBLER UNE BANDE DE MATIÈRE MULTICOUCHE AU MOYEN D'ULTRASONS

(30) Priorität: 20.11.2001 DE 10156104
(43) Veröffentlichungstag der Anmeldung: 18.08.2004
(73) Patentinhaber: Gmeiner, Josef, 92729 Weiherhammer (DE)
(72) Erfinder: Gmeiner, Josef, 92729 Weiherhammer (DE)
(74) Vertreter: Bergmeier, Werner
(86) Internationale Anmeldenummer: PCT/EP2002/012755
(87) Internationale Veröffentlichungsnummer: WO 2003/043807

(56) Entgegenhaltungen:
- EP-A- 1 125 846
- WO-A-99/38667
- FR-A- 1 264 171
- FR-A- 1 382 415
- FR-A- 2 285 975
- US-A- 4 047 992
- US-A- 4 747 894
- US-A- 6 010 766
- PATENT ABSTRACTS OF JAPAN vol. 014, no. 583 (M-1064), 26. Dezember 1990 (1990-12-26) -& JP 02 253935 A (MITSUBISHI HEAVY IND LTD), 12. Oktober 1990 (1990-10-12)

## Beschreibung

Die Erfindung betrifft eine Vorrichtung und ein Verfahren zum Verbinden einer mehrlagigen Materialbahn mittels Ultraschall in einem Spalt zwischen einer Ultraschallschwingeinrichtung und einem Gegenwerkzeug.

Die DE 44 39 284 C3 beschreibt eine Vorrichtung zum fortlaufenden Ultraschallbearbeiten einer Materialbahn mittels einer Ultraschallschwingeinheit und einem Gegenwerkzeug. Die Materialbahn kann eine unterschiedliche Anzahl von Lagen enthalten, diese wird jedoch als bereits aufeinandergelegte, einheitliche Materialbahn dem Spalt zugeführt. Je nach Ultraschallintensität im Spalt wird die Materialbahn bei der Bearbeitung miteinander verbunden oder geschnitten. Bezogen auf die Breite der Materialbahn ist die Bearbeitungsbreite schmal.

Auch die DE 100 27 735 C1 zeigt eine solche Ultraschallbearbeitungsvorrichtung, bei der eine bereits übereinandergelegte, mehrlagige Materialbahn in den Spalt zwischen einer Ultraschallschwingeinheit und einem Gegenwerkzeug eingeführt wird. Die Verbindung zwischen den Materialbahnen erfolgt bezogen auf die Breite der Materialbahn in einem schmalen Bereich. Beim Durchziehen der Materialbahn durch den Spalt werden die Lagen miteinander verschweißt, da eine der Lagen eine schweißbare, flexible Schicht ist. Hierzu ist eine thermoplastische Schicht erforderlich, die durch die Wärmeentwicklung im Ultraschallfeld aufschmilzt und eine Verklebung der einzelnen Lagen untereinander bewirkt. Nach diesem Prinzip arbeitet auch die Vorrichtung gemäß der US-P 6,010,766.

Auch gemäß der JP 02-253935 wird zwischen zwei Materialbahnen eine dritte Bahn aus schmelzfähigem Material zugeführt. Durch den Einfluss einer Ultraschalleinrichtung schmilzt dieses Material und verklebt dadurch die beiden Materialbahnen.

Die US-P 4,747,894 offenbart das Bestreichen einer der beiden Materialbahnen mit einem Kleber. Nachdem die beiden Materialbahnen mit dem dazwischen angeordneten Kleber zusammengebracht wurden, werden sie mit der Energie einer Ultraschalleinrichtung beaufschlagt. Hierdurch trocknet der Kleber schneller.

Nachteilig bei dem aufgezeigten Stand der Technik ist es, dass stets schmelzfähige Materialien oder Klebstoffe zum Verbinden von zwei Materialbahnen erforderlich sind. Dies verteuert die Herstellung und das Recycling der Mehrlagigen Materialbahn. Materialbahnen aus nicht schmelzbarem Material oder ohne Kleber sind mit den herkömmlichen Vorschlägen nicht möglich und schränken daher deren Einsatzbereich ein.

In der FR-A-1.382.415 wird die Verbindung von zwei Papierblättern mittels einer Ultraschaileinrichtung offenbart. Dabei werden die zwei Papiere flächig miteinander verbunden um einen Gegenstand verpacken zu können. Die Papiere werden mit einer definierten Kraft aufeinander gedrückt und der Ultraschalleinrichtung ausgesetzt. Wie der Offenbarung zu entnehmen ist, ist für die Festigkeit der Druck auf die Papiere besonders wichtig. Die Verbindung der beiden Papierblätter erfolgt großflächig, so dass die Festigkeit pro Flächeneinheit für eine ausreichende Festigkeit der Verbindung gering sein kann.

Es ist Aufgabe der Erfindung, eine Vorrichtung und ein Verfahren zum Ultraschallverbinden einer mehrlagigen Materialbahn vorzusehen, mit der ein breiter Einsatzbereich für verschiedene Materialbahnen ermöglicht wird

Diese Aufgabe wird erfindungsgemäß durch eine Vorrichtung gemäß Anspruch 1 und durch ein Verfahren gemäß Anspruch 35 gelöst.

Zusammenfassend ergeben sich durch die Vorrichtung gemäß Anspruch 1 oder einem der Unteransprüche die folgenden möglichen Einsatzgebiete:
- Großflächige, kontinuierliche oder diskrete Verbindung der einzelnen Lagen der Materialbahn im wesentlichen auf der gesamten Breite der Materialbahn.
- Verbinden von Materialbahnen auch ohne thermoplastische Zusatzstoffe.
- Verarbeitung einer oder mehrerer der Lagen der Materialbahn und anschließendes Verbinden der Materialbahn mit dem gleichen Werkzeug bzw. mit gleichen Teilen des Werkzeugs.
- Optimierung des Energieeinsatzes beim Ultraschallverbinden in diskreten aber verteilten Verbindungsbereichen.
- Mikroverspleisung von aneinanderliegenden Grenzflächen von Fasern enthaltenden Materialbahnen.

Bei der Herstellung von Wellpappe durch eine Vorrichtung gemäß einen der Ansprüche lassen sich eine oder mehrere der folgenden Vorzüge erreichen:
- Verringerung des Feuchtigkeitseintrags bei der Herstellung der Wellpappenbahn.
- Verringerung des Wärmeeintrags beim Verbinden der Bahnlagen.
- Verringerung des Energiebedarfs beim Trocknen der verbundenen Wellpappenbahn.
- Wegfall eines Verbindemittels (Kleber).
- Erhebliche Reduzierung der Baugröße der Wellpappenherstellungsmaschine.
- Schnellere Maschinenumstellung, beispielsweise durch Wegfall oder Reduzierung der notwendigen Vorwärmphasen.
- Wegfall oder Verkürzung der Einlaufphase nach Wiederanfahren der Anlage.

Bei der Vorrichtung gemäß Anspruch 1 werden mehrere Lagen einer Materialbahn in einen ersten Spalt zwischen einer ersten Ultraschallschwingeinrichtung und zumindest einem ersten Gegenwerkzeug mittels Ultraschall verbunden. Zumindest eine erste, flächig ausgebildete Ausgangsmaterialbahn und eine zweite, flächig ausgebildete Ausgangsmaterialbahn werden getrennt mittels einer ersten und einer zweiten Zuführeinrichtung in den ersten Spalt zugeführt. Vorteilhaft werden die erste und die zweite Ausgangsmaterialbahn erst unmittelbar vor dem Spalt oder im Spalt zur Anlage gebracht.

Die zugeführte zweite Ausgangsmaterialbahn ist profiliert. Auch kann die zugeführte erste oder eine weitere Ausgangsmaterialbahn profiliert sein. Profiliert bedeutet, dass die Ausgangsmaterialbahn eine dreidimensionale, regelmäßige oder unregelmäßige Oberflächenstruktur aufweist. Die Ober-und/oder Unterseite der zweiten Ausgangsmaterialbahn ist nicht eben, sondern weist Erhebungen und Vertiefungen auf. Vorteilhaft ist die Profilierung in Längsrichtung oder Querrichtung zur Materialbahn. Die Profilierung kann z.B. geradlinig, zickzackförmig oder wellenlinienförmig sein. Zur Herstellung einer belastbaren Verbundstruktur ist die profilierte Ausgangsmaterialbahn gewellt oder geknickt, um mit der ersten Ausgangsmaterialbahn eine belastungsfähige Leichtstruktur zu erzielen.

Die erste Ultraschallschwingeinrichtung ist angrenzend an die erste Ausgangsmaterialbahn und das Gegenwerkzeug angrenzend an die zweite Ausgangsmaterialbahn angeordnet. Dabei kann die Ultraschallschwingeinrichtung auf der Oberfläche der ersten Ausgangsmaterialbahn anliegend oder dicht angrenzend angeordnet sein. Der Abstand zwischen der Ultraschallaussendenden Oberfläche der ersten Ultraschallschwingeinrichtung und der Anlagebereiche zwischen der ersten und zweiten, profilierten Ausgangsmaterialbahn ist dann am geringsten.

Erfindungsgemäß weist die zweite Zuführeinrichtung ein Profilwalzenpaar zum Profilieren der zweiten Ausgangsmaterialbahn auf, so kann in einer Vorrichtung die Verbindung zwischen der ersten und zweiten Ausgangsmaterialbahn hergestellt werden und ebenso die zweite Ausgangsmaterialbahn profiliert werden. Das Profilwalzenpaar erzeugt beispielsweise das oben erwähnte Profil der zweiten Ausgangsmaterialbahn. Bei quer zur Materialbahn verlaufendem Profil sind die Profilwalzen in axialer Richtung profiliert und bei längs zur Materialbahn verlaufender Profilierung sind die Walzenpaare in Umfangsrichtung profiliert. Besonders vorteilhaft weist das Profilwalzenpaar zwei Riffelwalzen auf, wie sie beispielsweise zur Ausbildung einer Wellenbahn für Wellpappe bekannt ist.

Erfindungsgemäß wirkt die eine der Profilwalzen des Profilwalzenpaares als Gegenwerkzeug der Ultraschallschwingeinrichtung. Dadurch wird der zweiten Ausgangsmaterialbahn zunächst das Profil beim Durchlauf durch das Profilwalzenpaar aufgeprägt und anschließend wird die Profilierung zur Verbesserung der Verbindung zwischen der ersten Ausgangsmaterialbahn und der zweiten Ausgangsmaterialbahn eingesetzt. Daher ist kein separates, speziell bearbeitetes Gegenwerkzeug für die erste Uttraschattschwingeinrichtung erforderlich.

Die Kuppen oder Vorsprünge der ersten Profilwalze nähern sich am stärksten der Ultraschallemissionsfläche der ersten Ultraschallschwingeinrichtung. Durch eine Ultraschallreflektionsfläche wird der Ultraschall stärker von der Profilwalze weg reflektiert und der Ultraschalleintrag in die Profilwalze ist verringert. Vorzugsweise ist die Ultraschallreflektionsfläche im Bereich der Kuppen oder Vorsprünge der Profilwalze ausgebildet, so dass der Ultraschall in den Spalt zurückreflektiert wird. Dadurch ist der Schalldruck im Spalt erhöht. Vorzugsweise wird der Schall zur ersten Ultraschallschwingeinrichtung zurückreflektiert, so dass das Feld im Spalt noch weiter erhöht ist. Dadurch kann auch die Ausbildung einer stehenden Welle im Spalt verbessert werden.

Ist der ersten Ultraschallschwingeinrichtung eine erste Versorgungseinheit zugeordnet, deren Leistung zeitlich variierbar ist, so kann der Leistungseintrag zeitlich an die Erfordernisse für die herzustellende Verbindung angepasst werden. Der Leistungsbedarf ist verringert und der Wärmeeintrag in die Materialbahn ebenso. Damit können beispielsweise diskrete Verbindungsbereiche zwischen den Materialbahnen ausgebildet werden. Soll eine großflächige Verbindung der Materialbahn erreicht werden, so sind diese diskreten Verbindungsbereiche flächig über die Breite und Länge der Materialbahn verteilt.

Weist die zweite Ausgangsrhaterialbahn in Längsrichtung eine periodische Profilierung auf, so ist vorteilhaft die Periode der zeitlichen Änderung der Leistungsmodulation durch die erste Versorgungseinheit entsprechend der Periode der Profilierung beim Durchziehen der Materialbahn durch den Spalt, Vorteilhaft ist die Periode der Leistungsmodulation selbst veränderbar, so dass bei einer sich ändernden Durchzugsgeschwindigkeit der Materialbahn die Perioden aufeinander abgestimmt werden. Vorteilhaft gibt die Versorgungseinrichtung darin ihr Leistungsmaximum ab, wenn im Spalt gerade ein Bereich der Materialbahn durchgezogen wird, bei dem die zweite Ausgangsmaterialbahn auf der ersten Ausgangsmaterialbahn aufliegt. Dabei wird bevorzugt in dem Bereich Leistung aufgebracht und/oder Energie in die Materialbahn übertragen, in dem auch tatsächlich eine Verbindung zwischen den Bahnen hergestellt werden soll.

Die Leistungsmodulation kann in Form einer Schwebung erfolgen. Damit ist ein materialschonender Betrieb für eine Ultraschallschwingeihrichtung gegeben, da keine Leistungssprünge auftreten und somit Oberschwingungen der Ultraschallschwingeinrichtung vermieden werden. Die Schwebung kann durch Modulation innerhalb der ersten Versorgungseinheit selbst erreicht werden. Oder die Modulation wird durch eine Verstimmung zwischen der Anregungsfrequenz für die Ultraschallschwingeinrichtung und der Eigenfrequenz der Ultraschallschwingeinrichtung erreicht. Die Frequenz der Schwebung lässt sich durch den Frequenzunterschied zwischen der Anregung und der Eigenfrequenz der Ultraschallschwingeinrichtung einstellen. Damit ist eine Anpassung der Periode der Schwebung an die Durchlaufgeschwindigkeit der Materialbahn im Spalt möglich.

Bei einer vorteilhaften Ausgestaltung führt eine dritte Zuführeinrichtung eine dritte, flächig ausgebildete Ausgangsmaterialbahn in einen zweiten Spalt zwischen einer zweiten Ultraschallschwingeinrichtung und zumindest einem zweiten Gegenwerkzeug zu Im zweiten Spalt werden die Materialbahnen (z.B. bestehend aus der ersten und der zweiten Ausgangsmaterialbahn) mit der dritten oder einer weiteren Ausgangsmaterialbahn verbunden. Bei einer Ausgestaltung wird die dritte Ausgangsmaterialbahn auf der Seite der zweiten Ausgangsmaterialbaihn zugeführt. Ist die zweite Ausgangsmaterialbahn beispielsweise profiliert, so lässt sich durch Zuführen einer ebenen, dritten Ausgangsmaterialbahn eine Sandwich-Struktur ausbilden, wie sie beispielsweise von der Wellpappe bekannt ist.

Ist die zweite Ultraschallschwingeinrichtung angrenzend die dritte Ausgangsmaterialbahn angeordnet, so liegt die Ultraschall-aussendende Fläche der zweiten Ultraschallschwingeinrichtung dem Berührungsbereich zwischen der zweiten und dritten Ausgangsmaterialbahn am nächsten. In Ausgestaltungen ist das zweite Gegenwerkzeug, das mit der zweiten Ultraschallschwingeinrichtung zusammenwirkt, eine glatte Walze oder eine profilierte Walze, die vorzugsweise eine Profilierung aufweist, die derjenigen der ersten Profilwalze entspricht.

Bei einer Ausgestaltung ist eine Mulde in einer Ultraschallreflektionsfläche und/oder eine Kuppe und/oder ein Vorsprung der Ultraschallreflektionsfläche einer Profilwalze mit einem Material aufgefüllt, das eine geringere Ultraschallreflektivität als das Material der Ultraschallreflektionsfläche aufweist. Dadurch dringt der Ultraschall vom Spalt durch das Füllmaterial und wird primär an der unteren Ultraschallreflektionsfläche reflektiert. Durch Auffüllen der Mulde wird eine ebene Fläche bzw. vorgewölbte Fläche ausgebildet, so dass in der Mulde kein Schmutz abgelagert werden kann. Umgekehrt wird durch das Auffüllen der Reflektionsfläche einer Kuppe oder eines Vorsprungs die Formgebung bei der Profilierung entsprechend der Gegenprofilwalze eingehalten, während die Reflektion unterstützt wird.

Bei einer Ausgestaltung weist die Vorrichtung eine erste und/oder zweite Verstelleinheit zum Ändern der ersten und/oder zweiten Spaltbreite auf. Damit wird eine Anpassung an verschiedene Materialstärken ermöglicht. Auch kann die Spaltbreiteneinstellung derart erfolgen, dass bei der gewählten Schwingfrequenz der ersten und/oder zweiten Ultraschallschwingeinrichtung eine stehende Welle bzw. Resonanz ausgebildet wird. Die Resonanzbedingung bzw. eine stehende Welle ergibt sich auch bei unverändertem Spalt durch Änderung der Schwingfrequenz. Bei Resonanz ist der Schalldruck im Bereich der Druckbäuche am höchsten, während die Luft- oder Materialbewegung im Bereich der Druckknoten, am höchsten ist. Durch Ändern von Spaltbreite und/oder Anregungsfrequenz wird die Lage eines Druckbauchs bzw. -knotens verlagert. Wird ein Druckknoten in den Bereich der verbindenden Flächen verschoben, so wird dort die größte Materialbewegung erzeugt.

Bei einer weiteren Ausgestaltung erstrecken sich der erste und/oder zweite Bearbeitungsspalt zumindest im wesentlichen über die gesamte Bahnbreite der mehrlagigen Materialbahn. Vorzugsweise ist die erste und/oder zweite Ultraschallschwingeinrichtung sektionsweise unterteilt und weist mehrere Ultraschallschwinger auf, so dass durch Zu- und Abschalten einzelner Ultraschallschwinger oder Gruppen von Uttraschaiischwingern die Bearbeitungs-spaltlänge auf die Breite der Materialbahn einstellbar ist. Damit werden zumindest zwei Lagen der Materialbahn großflächig kontinuierlich oder in verteilten, diskreten Bereichen miteinander verbunden.

Mittels einer Auftrageinrichtung wird auf die erste, zweite und/oder dritte Ausgangsmaterialbahn Wasser aufgetragen bzw. appliziert. Beispielsweise durch eine auf der Oberfläche der Materialbahn entlang abrollende Rolle oder durch eine Sprüheinrichtung oder dergleichen. Eine Auftragung auf die zu verbindenden Bereiche zwischen den Materialbahnen genügt dabei. Beispielsweise wird auf die Kuppen der profilierten, zweiten Ausgangsmaterialbahn, die im Spalt mit der ersten und/oder zweiten Ausgangsmaterialbahn verbunden werden soll, ein Feuchtigkeitsfilm aufgetragen.

Bei einer weiteren Ausgestaltung wird eine weitere Zuführeinrichtung vorgesehen, die ein weiteres Profilwalzenpaar zum Profilieren einer weiteren Ausgangsmaterialbahn aufweist Neben der profilierten, zweiten Ausgangsmaterialbahn wird damit eine weitere profilierte Ausgangsmaterialbahn in einen weiteren Spalt zwischen einer weiteren Ultraschallschwingeinrichtung und einem weiteren Gegenwerkzeug eingeführt. Damit wird eine mehrlagige Materialbahn mit zumindest zweit profilierten Ausgangsmaterialbahnen vorgesehen. Vorzugsweise ist die Profilierung der weiteren Ausgangsmaterialbahn versetzt, beispielsweise quer verlaufend, ausgebildet. Damit läßt sich beispielsweise eine Wellpappe mit zweilagiger Wellenbahn ausbilden.

Die eben beschriebene Vorrichtung eignet sich unter anderem zur Herstellung von Wellpappe. Zur Verbindung der Papierbahnen untereinander ist es nicht erforderlich ein Verbindungsmittel einzusetzen. Insbesondere ist kein Kleber notwendig.

Die eben beschriebene Vorrichtung eignet sich auch besonders zur Herstellung einer Verbindung zwischen Materialbahnen, die Faserteilchen enthalten. Beispielsweise Papierbahnen oder dergleichen. Es ist nicht erforderlich, dass die miteinander zu verbindenden Ausgangsmaterialbahnen thermoplastische Bestandteile, insbesondere thermoplastische Kunststoffbestandteile enthalten und/oder dass ein Kleber aufgetragen wird. Dadurch verbessert sich die Verträglichkeit der Materialien und/oder deren Eignung zum Wiederverwerten (Recycling) wird verbessert.

Bei Materialbahnen mit Faserteilchen können die folgenden Verbindungswirkungen allein oder in Kombination mit unterschiedlichem Anteil zur Wirkung kommen:
- Mikroverspleisung der Faserteilchen einer Ausgangsmaterialbahn mit den Faserteilchen der anderen Ausgangsmaterialbahn. Dabei werden durch die mechanische Bewegung im Ultraschallfeld die Teilchen aus ihrem ursprünglichen Verbund gelöst und bilden mit den so gelösten, umstehenden Faserteilchen einen neuen Verbund.
- Flüssigkeit innerhalb der Materialbahn oder auf der Materialbahn wird durch den Ultraschall zerstäubt und bewirkt eine mechanische Auflösung der Ausgangsmaterialbahn in beschränkten Einwirkbereichen, so dass sich die aufgelösten Bereiche neu formieren können.
- Durch die thermische Einwirkung löst sich das Verbundmittel der Ausgangsmaterialbahn auf (beispielsweise unter Einwirkung von Wasser) und härtet unter Herstellung einer neuen Verbindung zwischen zwei aneinandergrenzenden Ausgangsmaterialbahnen erneut aus.

Bei der Herstellung von Wellpappe wurde festgestellt, dass kein Kleber zur Verbindung der Papierbahnen notwendig ist. Erfindungsgemäß wird Wasser aufgetragt. Gegenüber den herkömmlichen Herstellverfahren für Wellpappe muss keine Trocknung an die Verbindungseinrichtung anschließen. Auf eine Trockenanlage kann ganz verzichtet werden oder die Trockenanlage kann erheblich verkleinert werden. Durch die Mikroverspleisung der Fasern der angrenzenden Papierbahnen ist die Feuchtigkeitsbeständigkeit der so hergestellten Wellpappe erheblich verbessert. Gegenüber herkömmlich verklebter Wellpappe lösen sich die Papierbahnen erst nach einer längeren Einwirkzeit von Feuchtigkeit.

Ausführungsbeispiele der Erfindung werden anhand von Zeichnungen erläutert. Es zeigen:
- **Fig. 1**: eine schematische Querschnittsansicht einer modularen Wellpappenherstellungsmaschine,
- **Fig. 2A und 2B**: Ausführungsformen einer Verbindungseinheit für die dritte Papierlage,
- **Fig. 3**: eine schematische Querschnittsansicht einer Wellpappenheritellungsmaschine gemäß einer zweiten Ausführungsform, die nicht Teil der Erfindung ist.
- **Fig. 4A - 4C**: Ausführungsformen von Ultraschallemissions- und - Reflektionsflächen,
- **Fig. 5A und 5B**: Einsätze für Ultraschallreflektionsflächen,
- **Fig. 6**: ein Zeitdiagramm der Leistungsmodulation und die Zuordnung zu einem durchlaufenden Wellpappenquerschnitt,
- **Fig. 7A und 7B**: zwei Ausführungsformen der Anordnung von Ultraschallsendern quer zur Papierbahn und
- **Fig. 8A und 8B**: die sich durch die Anordnung von 7A und 7B ergebenden Verbindungsbereichsmuster.

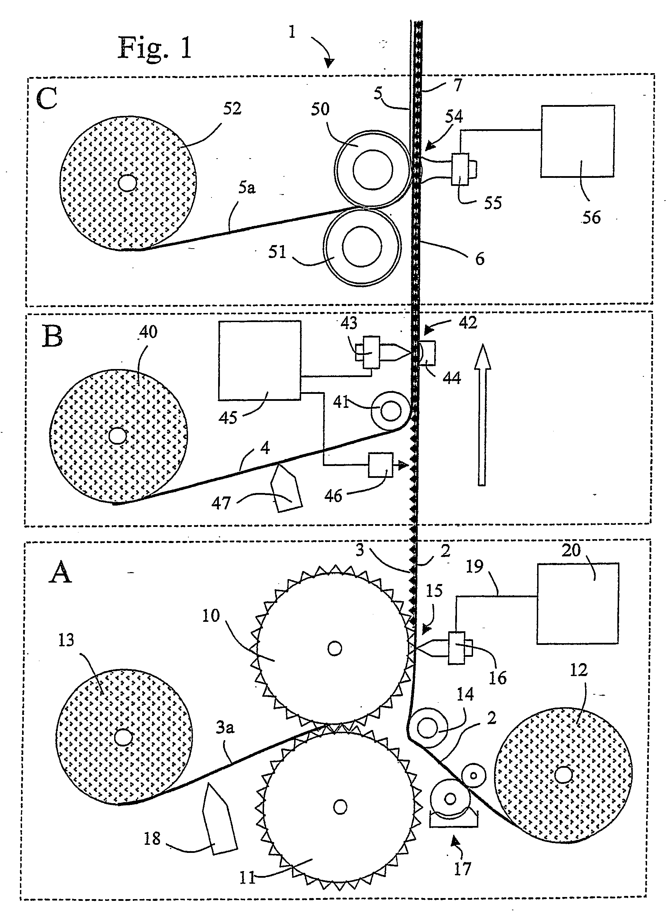

Fig. 1 zeigt eine schematische Querschnittsansicht durch eine modulare Wellpappenanlage 1. Drei Module A, B, C der Wellpappenanlage 1 sind dargestellt. Im Modul A wird eine erste Deckenbahn 2 mit einer ersten Wellenbahn 3 verbunden. Im Modul B wird eine zweite Deckenbahn 4 mit den verbundenen Bahnen 2, 3 verbunden. Auf die einlagige Wellpappe 6 aus dem Modul B wird im Modul C eine zweite Wellenbahn 5 aufgebracht. Nicht dargestellt schließt sich ein Modul D an, das auf die zweite Wellenbahn 5 eine dritte Deckenbahn aufbringt, so dass eine zweilagige Wellpappe 7 mit drei Deckenbahnen erzeugt wird. Im Modul A erzeugt ein erstes Riffelwalzenpaar 10, 11 aus einer Papierbahn 3a die erste Wellenbahn 3. Die erste Wellenbahn 3 ist quer zur Bahnrichtung geriffelt. Im Modul C erzeugt ein Riffelwalzenpaar 50, 51 aus einer Papierbahn 5a die zweite Wellenbahn 5. Die Riffelung bzw. Profilierung der zweiten Wellenbahn 5 verläuft in Längsrichtung der Bahn, so dass bei der zweilagigen Wellpappe 7 die Riffelung der Wellenbahnen 3, 5 gekreuzt ist. Der von unten nach oben verlaufende Pfeil stellt die Vorschubrichtung für die Wellpappe dar. Die mit den Papierbahnen oder den Deckenbahnen in Eingriff oder Berührung stehenden Walzen drehen sich mit einer Umfangsgeschwindigkeit, die der Fördergeschwindigkeit der Bahnen entspricht oder ungefähr entspricht.

Die Papierbahnen 2, 3a; 4,5a werden der Reihe nach von einem ersten Papierrollenlager 12, einem zweiten Papierrollenlager 13, einem dritten Papierrollenlager 40 und einem vierten Papierrollenlager 52 gespeist. Im Modul A wird die durch das erste Papierrollenlager 12 zugeführte erste Deckenbahn 2 durch eine Umlenkrolle 14 umgelenkt und in, einen ersten Spalt 15 zwischen der ersten Riffelwalze 10 und einer ersten Zeilenschwingereinheit 16 eingeführt. Zwischen dem zweiten Papierrollenlager 13 und dem Riffelwalzenpaar 10,11 ist eine Befeuchtungseinrichtung 18 angeordnet, die einen Feuchtefilm auf die Papierbahn 3a aufträgt. Die Befeuchtungseinrichtung 18 kann auch zwischen dem ersten Spalt 15 und dem ersten Papierrollenlager 12 vorgesehen sein oder zusätzlich zur Befeuchturigseinrichtung 18 zum Befeuchten der Papierbahnen 3a und 2.

Im Modul A ist die Zeilensdhwingereinheit 16 über eine Leitung 19 mit einem Ultraschallgenerator 20 verbunden. Von der an den ersten Spalt 15 angrenzenden Fläche wird der Ultraschall durch die Zeilenschwingereinheit 16 in den Spalt 15 abgestrahlt. Auf der Gegenseite des Spalts 15 trifft der Ultraschall auf eine Oberfläche der Riffelwalze 10.

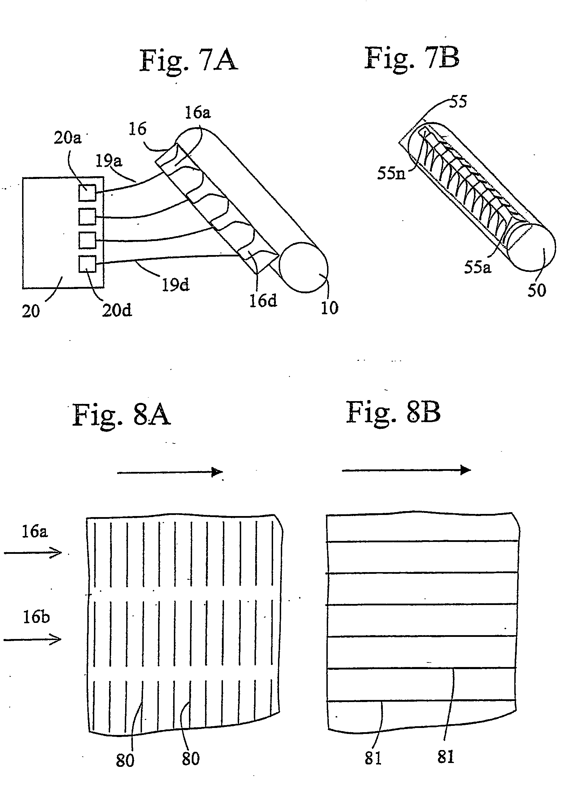

Fig. 7A zeigt eine schematische Darstellung der Zeilenschwingereinheit 16, die der Walze 10 gegenüberliegt. Die Zeilenschwingereinheit 16 ist aus mehreren, nebeneinander liegenden Schwingersektionen 16a-d zusammengesetzt. Die Abstrahlflächen der einzelnen Schwingersektionen 16a-d sind länglich und in Richtung der Walzenachse verlaufend ausgebildet. Jede Schwingersektion 16a-d ist über eine Leitung 19a-d mit einem Leistungstreiber 20a-d des Ultraschallgenerators 20 verbunden. Der Generator 20 kann so betrieben werden, dass die Phase, Amplitude und Frequenz der Leistungstreiber identisch ist. Amplitude, Leistung, Frequenz und Phase können jedoch auch von Leistungstreiber zu Leistungstreiber zur Optimierung des Betriebs der einzelnen Schwingersektionen 16a-d teilweise unterschiedlich sein. Beispielsweise wird die Leistungsabgabe konstant geregelt, während die Frequenz auf die Erzeugung einer Resonanz im ersten Spalt 15 optimiert wird. Eine oder mehrere Schwingersektionen 16a-d lassen sich zu- oder abschalten, um nur dort Ultraschalleistung abzugeben, wo tatsächlich die Wellpappenbahn bzw. die Decken- und/oder Wellenbahn durchläuft. Durch Zu-oder Abschalten wird die aktive Spaltlänge auf die benötigte Wellpappenbreite eingestellt. Die unten beschriebenen Zeilenschwingereinheiten 43, 70 und/oder 71 können entsprechend aufgebaut sein und betrieben werden.

Im Modul B wird die zweite Deckenbahn 4 durch eine zweite:Umlenkrolle 41 zur Verbundbahn aus erster Deckenbahn 2 und erster Wellenbahn 3 umgelenkt und in einem zweiten Spalt 42 zwischen einer zweiten Zeilenschwingereinheit 43 und einer Reflektorzeile 44 zur Anlage gebracht. Der zweite Zeilenschwinger 43 wird durch einen zweiten Ultraschallgenerator 45 angetrieben und kann entsprechend der ersten Zeilenschwingereinheit 16 ausgebildet sein. Im zweiten Spalt 42 wird die zweite Deckenbahn 4 mit der ersten Wellenbahn 3 in Kontakt gebracht und an den Berührungsflächen miteinander verbunden. Ein Abstandssensor 46 erfasst die Berge und Täler der ersten Wellenbahn 3 und sendet die Signale zum zweiten Ultraschallgenerator 45, um eine zeitliche Leistungsmodulation in Abhängigkeit der Abfolge und Lage der Berge und Täler zu bewirken. Anhand der Vorschubgeschwindigkeit der Wellenbahn in diesem Bereich wird zeitversetzt ein Leistungsmaximum des Ultraschalls von der zweiten Zeilenschwingereinheit 43 derart abgegeben, dass im Anlagebereich zwischen der ersten Wellenbahn 3 und der zweiten Deckenbahn 4 maximale Leistungsimpulse erzeugt werden. Optional ist zwischen dem dritten Papierrollenlager 40 und dem zweiten Spalt 42 eine Befeuchtungseinrichtung 47 angeordnet. Diese entsprechen der Befeuchtungseinrichtung 18 im Modul A.

Die einlagige Wellpappe 6 wird zum Modul C weitertransportiert, wo sie in einen dritten Spalt 54 gelangt. Mit der gleichen Geschwindigkeit wird in den dritten Spalt 54 die zweite Wellenbahn 5 eingespeist, die durch das Zusammenwirken der dritten und vierten Riffelwalze 50, 51 ausgebildet wurde. Der dritte Spalt 54 wird auf der einen Seite durch eine Recherischwingereinheit 55 und auf der anderen Seite durch die dritte Riffelwalze 50 begrenzt. Die Rechenschwingereinheit 55 wird durch den Ultraschallgenerator 56 angetrieben. Im dritten Spalt 54 werden die zweite Wellenbahn 5 und die zweite Deckenbahn 4 miteinander verbunden, so dass die zweilagige Wellpappe 7 entsteht.

Fig. 7B zeigt eine schematische Draufsicht auf die Rechenschwingereinheit 55. Die Rechenschwingereinheit 55 ist aus Schwingersektionen 55a-n zusammengesetzt. Die Abstrahlfläche der einzelnen Schwingersektionen 55a-n ist länglich in Richtung der Umfangsrichtung der Walze verlaufend ausgebildet. Zusätzlich sind die Abstrahlflächen mit einem Radius gekrümmt, der ungefähr dem Radius der Walze plus der Spaltbreite entspricht. Die Breite der Abstrahlfläche einer Schwingersektion kann sich über mehrere Riffel der dritten Riffelwalze 50 erstrecken. Es kann aber auch pro Riffel der Riffelwalze 50 eine Schwingersektion vorgesehen werden oder im Abstand von Vielfachen der Riffelweiten. Wie; bei der Einheit von Fig. 7A können die einzelnen Schwingersektionen, 55a-n in Fig. 7B synchron angetrieben werden, d. h. mit gleicher Phase, Frequenz und Leistung. Oder jeder Sektionsschwinger wird einzeln optimiert, wie bereits unter Bezugnahme auf Fig. 7A beschrieben wurde.

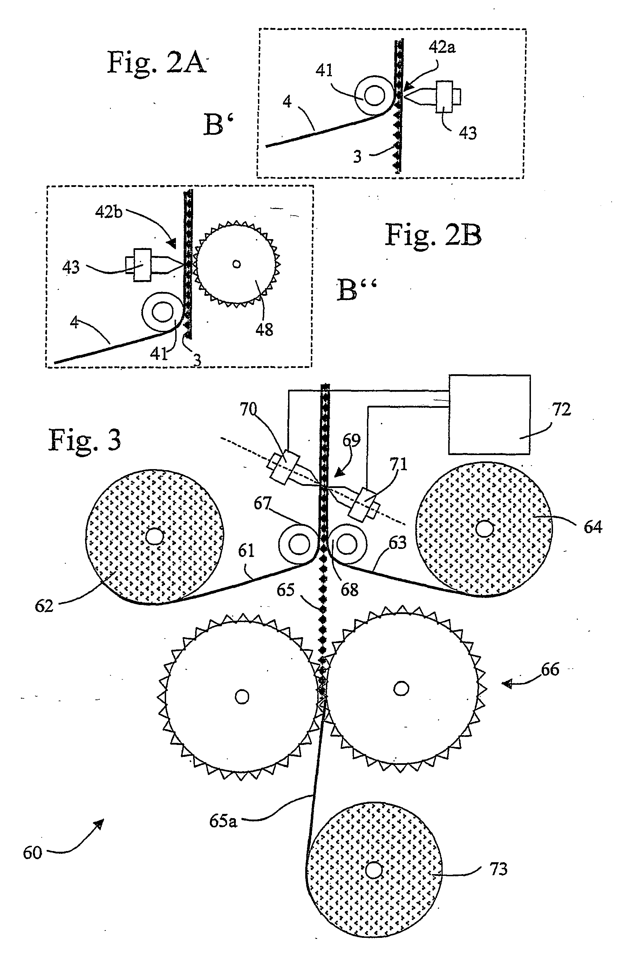

Fig. 2A und 2B zeigen Aufführungsformen des Moduls B. Soweit nicht anders angegeben, sind die gleichen Elemente vorgesehen. Bei Fig. 2A wird ein zweiter Spalt 42a zwischen der zweiten Zeilenschwingereinheit 43 und der Umlenkrolle 41 ausgebildet. Dabei entfällt die Reflektorzeile 44. Die Leistungsabgabe der zweiten Zeilenschwingereinheit 43 kann wiederum derart synchronisiert werden, dass ein Leistungsmaximum dann abgeben wird, wenn die zweite Deckenbahn 4 die erste Wellenbahn 3 berührt.

Bei der Ausführungsform gemäß Fig. 2B ist anstelle der Reflektorzeile 44 eine Riffelwalze 48 vorgesehen, deren Riffelung dem Rastermaß der ersten Wellenbahn 3 entspricht. Die Riffelwalze 48 wird derart mit dem Durchlauf der ersten Wellenbahn 3 synchronisiert, dass ein Vorsprung der Riffelwalze 48 dann als Spaltfläche des zweiten Spalts 42b wirkt, wenn die erste Wellenbahn 3 an der zweiten Deckenbahn 4 anliegt. Statt der Umlenkrolle 41 in Fig. 2A kann auch die Riffelwalze 48 vorgesehen sein.

Fig. 3 zeigt eine Ausführungsform einer integrierten Wellpappenanlage 60 die nicht Teil der Erfindung ist. Von einem ersten Papierrollenlager 62 wird eine erste Deckenbahn 61 über eine erste Umlenkrolle 67 zugeführt. Von einem zweiten Papierrollenlager 64 wird eine zweite Deckenbahn 63 über eine zweite Umlenkrolle 68 zugeführt. Eine erste Wellenbahn 65 wird aus einer Papierbahn 65a durch ein Riffelwalzenpaar 66 erzeugt. Die Papierbahn 65a wird durch ein drittes Papierrollenlager 73 dem Riffelwalzenpaar 66 zugeführt. Die drei Bahnen 61, 65, 63 gelangen in einen Spalt 69, der durch zwei gegenüberliegende Zeilenschwingereinheiten 70, 71 begrenzt wird. Die Zellenschwingereinheiten 70, 71 werden durch einen Ultraschallgenerator 72 angetrieben. Die Zeilenschwingereinheiten 70, 71 können im wesentlichen entsprechend der in Fig. 7A dargestellten Zeilenschwingereinheit ausgebildet sein. Die Zeilenschwingereinheiten 70, 71 sind derart zueinander versetzt, dass sie ein halbes Wellenraster der ersten Wellenbahn 65 auseinanderliegend an den Bahnen 61 und 63 anliegen. In diesem Fall liegt die erste Wellenbahn 65 an der ersten Deckbahn 61 im Bereich der ultraschallerzeugenden Fläche der ersten Zeilenschwingereinheit 70 an, wenn die erste Wellenbahn 65 an der zweiten Deckenbahn 63 im Bereich der ultraschallerzeugenden Fläche der zweiten Zeilenschwingereinheit 71 anliegt. Es ist auch möglich einen der Zeilenschwinger 70, 71 passiv zu betreiben, so dass dieser durch den Ultraschall der anderen Zeilenschwingereinheit zum Schwingen angeregt wird.

Im Spalt 69 werden die Bahnen 61, 63 und 65 räumlich eng aufeinanderliegend miteinander verbunden, so dass die Baugröße der integrierten Wellpappenanlage 60 erheblich reduziert ist. Wie in Fig. 1 dargestellt, kann entsprechend durch eine Befeuchtungseinrichtung Feuchtigkeit auf die erste Deckenbahn 61, die zweite Deckenbahn 63 und/oder die erste Wellenbahn 65 ein- oder zweiseitig aufgetragen werden. Weitere Module in der Reihenfolge C, B, D oder B, D können sich anschließen.

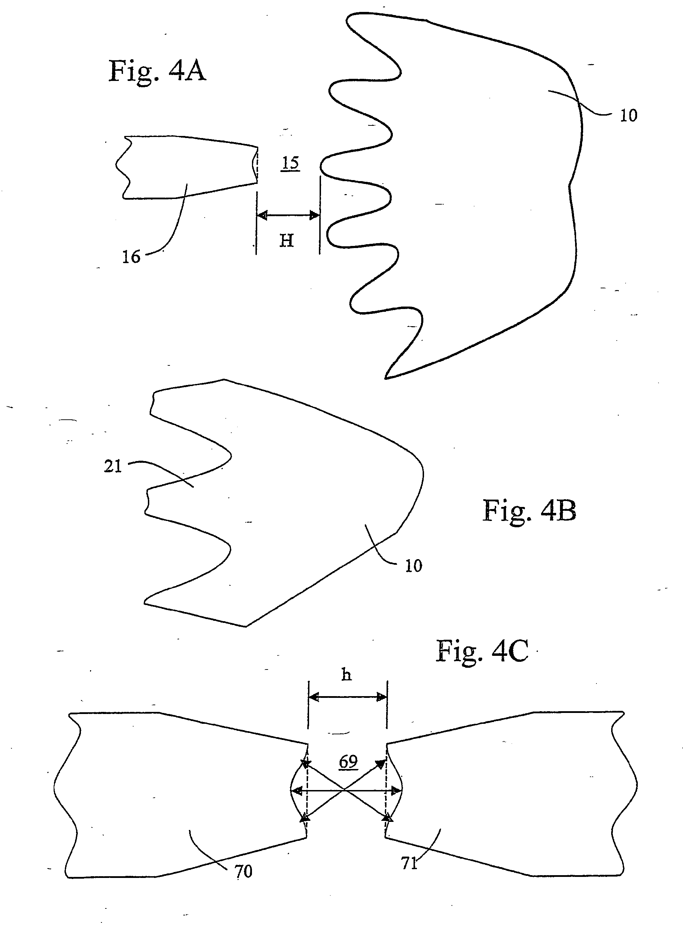

Fig. 4A zeigt eine vergrößerte Querschnittsansicht der ersten. Riffelwalze 10, des ersten Spalts 15 mit der Spaltbreite H und des Vorderteils der ersten Zeilenschwingereinheit 16. Die schallabgebende Vorderfläche der Zeilenschwingereinheit 16 ist muldenförmig, vorzugsweise parabelförmig oder kreisbogenförmig ausgebildet, so dass der Ultraschall in Richtung Oberfläche der erste Riffelwalze fokussiert wird. Die Mulde verläuft in Querrichtung zur Papierbahn (senkrecht zur Zeichenebene). Fig. 4B zeigt eine Ausgestaltung der ersten Riffelwalze: 10. bei der die Oberseite der Zähne 21 abgeflacht ist. Die Abflachung kann eben, muldenförmig, parabelförmig oder rund ausgebildet sein.

Fig. 4C zeigt einen Ausschnitt der gegenüberliegenden Zeilenschwingereinheiten 70, 71 von Fig. 3 im Detail. Die Begrenzungsflächen des Spalts 69 sind eben, muldenförmig, parabelförmig oder kreisbogenförmig ausgebildet. Die Vertiefung verläuft ebenfalls senkrecht zur Zeichenebene über die Breite der Zeilenschwingereiriheit bzw. deren Schwingersektionen. Durch Änderung der Frequenz oder der Spaltbreite h lässt sich eine stehende Ultraschallwelle im Spalt 69 erzeugen. Die stehende Welle kann eine halbe Wellenlänge oder ein Vielfaches einer halben Wellenlänge betragen. Die Zeilenschwingereinheit 71 kann, wie bereits erwähnt, passiv ausgebildet sein, indem sie lediglich den von der Zeilenschwingereinheit 70 abgestrahlten Schall reflektiert und ggf. selbst zur Schwingung, ggf. zur Resonanzschwingung, angeregt wird.

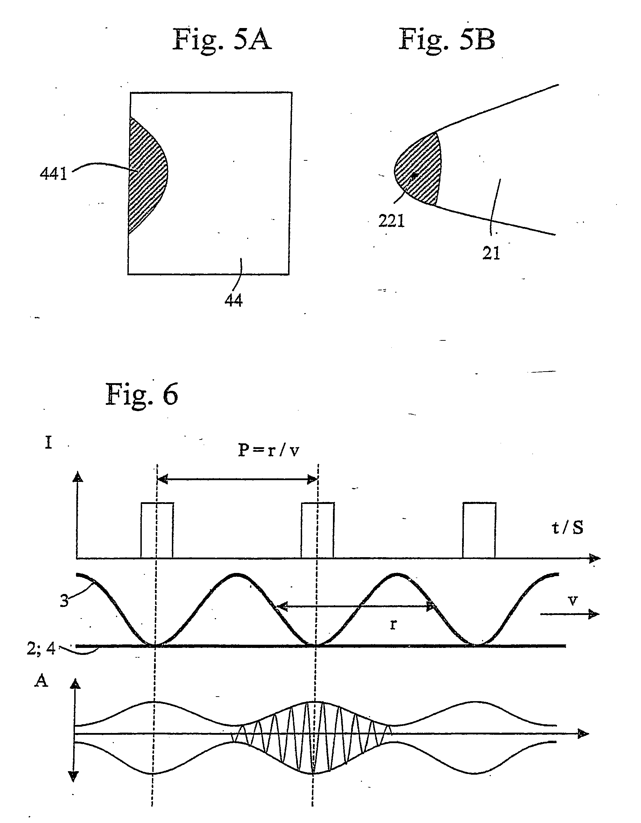

Fig. 5A zeigt eine Detailansicht der Reflektorzeile 44 des Moduls B in Fig. 1. Die spaltbegrenzende Fläche der Reflektorzeile 44 ist ebenfalls als Vertiefung 441 ausgebildet. Die Vertiefung kann ebenfalls muldenförmig, parabelförmig oder kreisbogenförmig ausgebildet sein kann. Zur Vermeidung von Schmutzablagerung ist die Vertiefung 441 vorzugsweise mit einem Material aufgefüllt, das an der Grenzfläche Luft/Material eine geringe Ultraschall-Reflektivität aufweist. Dadurch wird der größte Teil des spaltseitig auftreffenden Ultraschalls durch das Material 441 hindurch transmittiert und erst an der Krümmungsfläche der Vertiefung 441 reflektiert. Dadurch wird eine gerichtete Rückreflektion des auftreffenden Ultraschalls erreicht. Fig. 5B zeigt eine vergrößerte Querschnittsansicht des Zahns von Fig. 4B, bei dem die ursprüngliche Zahnkuppe 21 einen Aufsatz 211 aus einem Material wie das Material 441 aufweist.

Fig. 6 zeigt eine Ausgestaltung des zeitlichen Verlaufs der Leistungsabgabe durch den Ultraschallgenerator 20, 45 und/oder 72. Während die Materialbahn durch den Spalt 15, 42, 42a, 42b, 54 und/oder 69 gezogen wird, wird immer dann ein Leistungsmaximum abgegeben, wenn eine der Materialbahnen an der anderen anliegt. Dies ist in Fig. 6 durch die erste Wellenbahn 3 verdeutlicht, die entweder an der ersten oder zweiten Deckenbahn 2, 4 anliegt. Das obere Zeitdiagramm zeigt eine impulsförmige Abgabe der Leistung 1 und das untere Zeitdiagramm zeigt eine zeitabhängige Modulation der Schwingungsamplitude A in Form einer Schwebung. Die Periode P ist dabei gleich r/v, wobei v die Transportgeschwindigkeit der Wellpappe und r das Rastermaß der ersten Wellenbahn 3 ist.

Fig. 8A zeigt einen Ausschnitt der Fläche der Wellpappe, wenn mit der Anordnung von Fig. 7A eine zeitliche Leistungsmodulation gemäß Fig. 6 durchgeführt wird. Auf der Wellpappenfläche entstehen Verbindungsbereiche 80, die in Bahnquerrichtung entsprechend der Beabstandung der Schwingersektionen 16a-d beabstandet sind. In Bahnlängsrichtung sind die Verbindungsbereiche 80 entsprechend dem Rastermaß r voneinander beabstandet.

Fig. 8B zeigt die Verbindungslinien, wie sie beispielsweise mit der Anordnung von Fig. 7B erzeugt werden. Der Abstand der Verbindungslinien 81 entspricht dem Rastermaß; der zweiten Wellenbahn 5 bzw. der Beabstandung der Schwingersektionen 55a-n. Bei kontinuierlicher Leistungszuführung zur Rechenschwingereinheit 55 sind die Verbindungslinien 81 kontinuierlich und bei Leistungsmodulation teilweise unterbrochen.

Eine Wellpappenanlage muss nicht ausschließlich aus Ultraschallverbindungsmodulen aufgebaut sein. Eines oder mehrere der Module A, B, C oder D können bei einer herkömmlichen Wellpappenanlage eines oder mehrere der herkömmlichen Module ersetzen. Auch an die Wellpappenanlage von Fig. 3 können sich ein oder mehrere herkömmliche Module oder die Module B, C und/oder D anschließen. Herkömmliche Module sind beispielsweise ein Abroller, ein Splicer, ein Vorheizer, ein Modul Faser (Bandleader), ein Leimwerk, ein Heizer, eine Zugpartie und/oder weiterverarbeitende Anlagen wie Schneideeinrichtungen und Falzeinrichtungen.

## Patentansprüche

1. Vorrichtung zum Verbinden einer mehrlagigen Materialbahn mittels UltraSchall
- in einem ersten Spalt (15) zwischen einer ersten Ultraschallschwingeinrichtung (16) und zumindest einem ersten Gegenwerkzeug (10),
- mit einer ersten Zuführeinrichtung (12, 14) zum Zuführen zumindest einer ersten, flächig ausgebildeten und Fasern enthaltenden Ausgangsmaterialbahn (2) und
- einer zweiten Zuführeinrichtung (13, 10) zum Zuführen einer zweiten, flächig ausgebildeten und Fasern enthaltenden Ausgangsmaterialbahn (3a) in den ersten Spalt (15),
- wobei, die zweite Zuführeinrichtung (13, 10) ein Profilwalzenpaar (10, 11) zum Profilieren der zweiten Ausgangsmaterialbahn (3a) aufweist,
- der ersten und/oder zweiten Zuführeinrichtung (12, 14; 13, 10) eine Auftrageinrichtung (18) zum Applizieren von Wasser auf die erste und/oder zweite Ausgangsmaterialbahn (2, 3a) beigeordnet ist,
- der Ultraschallschwingeinrichtung (16) eine Versorgungseinheit (20) zugeordnet ist, mit welcher der Ultraschallschwingeinrichtung (16) eine Leistung zuführbar ist, welche die zweite Ausgangsmaterialbahn (3a) mit der ersten Ausgangsmaterialbahn (2) zu einer belastungsfähigen Leichtstruktur verbindet,
- die Leistung so gewählt ist, dass die Ultraschaitschwingeinrichtung (16) auch ohne Zwischenschaltung eines die Ausgangsmaterialbahnen (2, 3) verbindenden Materials derart auf die Fasern enthaltenden Materialbahnen einwirkt, dass sich aneinanderliegende Grenzflächen der Materialbahnen durch Mikroverspleisung ihrer Fasern verbinden,
- die erste Ultraschallschwingeinrichtung (16) angrenzend an die erste Ausgangsmaterialbahn (2) und das Gegenwerkzeug (10) angrenzend an die zweite Ausgangsmaterialbahn (3a) angeordnet ist und
- eine erste Profilwalze (10) des Profilwalzenpaares als Gegenwerkzeug wirkt.

2. Vorrichtung nach Anspruch 1, **dadurch gekennzeichnet, dass** die mehrlagige Materialbahn eine Wellpappe ist.

3. Vorrichtung nach Anspruch 1, **dadurch gekennzeichnet, dass** das Profilwalzenpaar (10, 11) zwei Riffelwalzen aufweist.

4. Vorrichtung nach Anspruch 1 oder 3, **dadurch gekennzeichnet, dass** die Vorsprünge oder Kuppen (21) der ersten Profilwalze (10) eine Ultraschallreflektionsfläche oder -beschichtung aufweisen, welche insbesondere so ausgebildet ist, dass sie den Ultraschall zumindest teilweise zur ersten Ultraschallschwingeinrichtung (16) zurückreflektiert.

5. Vorrichtung nach einem der vorhergehenden Ansprüche, **dadurch gekennzeichnet, dass** der ersten Ultraschallschwingeinrichtung (16) eine erste Versorgungseinheit (20) zugeordnet ist, mit der der ersten Ultraschallschwingeinrichtung (16) eine zeitlich änderbare Leistung zuführbar ist.

6. Vorrichtung nach Anspruch 5, **dadurch gekennzeichnet, dass** eine Periodenlänge (P) der Leistungsmodulation mit einer Periodenlänge (r) der Profilmodulation der zweiten Ausgangsmaterialbahn (3) im Spalt (15) und/oder der Spaltbreitenmodulation (H) durch die erste Profilwalze (10) synchronisiert ist.

7. Vorrichtung nach Anspruch 6, **dadurch gekennzeichnet, dass** die erste Versorgungseinrichtung (20) ein Leistungsmaximum abgibt, wenn die profilierte, zweite Ausgangsmaterialbahn (3) an der ersten Ausgangsmaterialbahn (2) anliegt und/oder eine Kuppe der ersten Profilwalze (10) der ersten Ultraschallschwingeinrichtung (16) gegenübersteht.

8. Vorrichtung nach einem der vorhergehenden Ansprüche 5 bis 7, **dadurch gekennzeichnet, dass** die erste Ultraschallschwingeinrichtung (16) durch die erste Versorgungseinheit (20) zu einer Ultraschallabgabe anregbar ist, der eine Schwebung mit der Periodenlänge (P) und/oder Spaltbreitenmodutatiön (H) überlagert ist.

9. Vorrichtung nach einem der vorhergehenden Ansprüche, **gekennzeichnet durch** eine dritte Zuführeinrichtung (40, 41; 52, 50) zum Zuführen einer dritten, flächig ausgebildeten Ausgangsmaterialbahn (4, 5a) insbesondere auf der Seite der zweiten Ausgangsmaterialbahn (3) in einen zweiten Spalt (42, 42a, 42b, 54).

10. Vorrichtung nach Anspruch 9, **dadurch gekennzeichnet, dass** der zweite Spalt (42, 42a, 42b, 54) zwischen einer zweiten Ultraschallschwingeinrichtung (43, 55) und einem zweiten Gegenwerkzeug (44, 41, 48; 50) zum Verbinden der Materialbahn (2, 3; 5) mit der dritten Ausgangsmaterialbahn (4, 6a, 5) angeordnet ist.

11. Vorrichtung nach Anspruch 10, **dadurch gekennzeichnet, dass** die zweite Ultraschallschwingeinrichtung (43) angrenzend an die dritte Ausgangsmaterialbahn (4) und das zweite Gegenwerkzeug (44) angrenzend an die erste Ausgangsmaterialbahn (2) angeordnet ist.

12. Vorrichtung nach einem der vorhergehenden Ansprüche 10 oder 11, **dadurch gekennzeichnet, dass** das zweite Gegenwerkzeug (44, 41, 48; 50) zumindest eine Ultraschallreflektionsfläche aufweist, die den Ultraschall zumindest teilweise zur zweiten Ultraschallschwingeinrichtung (43, 55) zurückreflektiert.

13. Vorrichtung nach Anspruch 11, **dadurch gekennzeichnet, dass** die zumindest eine Ultraschallreflektionsfläche in Bahnlängs- und/oder -querrichtung muldenförmig ausgebildet ist.

14. Vorrichtung nach Anspruch 12, **dadurch gekennzeichnet, dass** die zumindest eine Mulde (441, 211) mit einem Material aufgefüllt ist, das eine geringere Ultraschallreflektivität als das Material der Ultraschallreflektionsfläche aufweist.

15. Vorrichtung nach einem der vorhergehenden Ansprüche 10 bis 14, **dadurch gekennzeichnet, dass** das zweite Gegenwerkzeug (41, 48, 50) eine dritte, insbesondere profilierte Walze ist.

16. Vorrichtung nach Anspruch 15, **dadurch gekennzeichnet, dass** der Profilabstand der dritten Walze (48) mit einem Profilabstand der zweiten, profilierten Ausgangsmaterialbahn (3) und/oder der ersten Profilwalze (10) übereinstimmt.

17. Vorrichtung nach einem der vorhergehenden Ansprüche 15 oder 16, **dadurch gekennzeichnet, dass** die Drehgeschviüridigkeit der dritten Walze (48) derart mit der Materiatbahngeschwindigkeit synchronisiert ist, dass eine Kuppe der dritten Walze (48) dann an der ersten Ausgangsmaterialbahn (1) anliegt, wenn die zweite Ausgangsmaterialbahn (3) an der dritten Ausgangsmaterialbahn (4) anliegt.

18. Vorrichtung nach einem der vorhergehenden Ansprüche 10 bis 17, **dadurch gekennzeichnet, dass** der zweiten Ultraschallschwingeinrichtung (43, 55) eine zweite Versorgungseinrichtung (45, 56) zugeordnet ist, mit der der zweiten Ultraschallschwingeinrichtung (43, 55) eine zeitlich änderbare Leistung zuführbar ist.

19. Vorrichtung nach Anspruch 18, **dadurch gekennzeichnet, dass** die zweite Versorgungseinrichtung (45, 56) ein Leistungsmaximum abgibt, wenn die profilierte, zweite Ausgangsmaterialbahn (3) an der dritten Ausgangsmaterialbahn (4) anliegt und/oder ein Vorsprung (21) oder eine Kuppe der dritten Profilwalze (48) der zweiten Ultraschallschwingeinrichtung (43) gegenübersteht.

20. Vorrichtung nach Anspruch 18 oder 19, **dadurch gekennzeichnet, dass** die zweite Ultraschalischwingeinrichtung (43, 55) durch die zweite Versorgungseinrichtung (45, 56) zu einer Ultraschallabgabe anregbar ist, der eine Schwebung mit der Periodenlänge (P) und/oder Spaltbreitenmodulation (H) überlagert ist.

21. Vorrichtung nach einem der vorhergehenden Ansprüche 9 bis 20, **gekennzeichnet durch** eine Erfassungseinrichtung (46) zum Abtasten des Profils der zweiten Ausgangsmaterialbahn (3) vor dem Eintritt in den zweiten Spalt (42, 54) und eine Syndhronisiereinrichtung zum Synchronisieren der zeitlich modulierten Leistungsabgabe **durch** die zweite Versorgungseinrichtung (45, 56) und/oder der Drehung der dritten Profilwalze (48).

22. Vorrichtung nach einem der vorhergehenden Ansprüche 10 bis 21, **dadurch gekennzeichnet, dass** die erste und die zweite Ultraschallschwingeinrichtung (70, 71) nebeneinander angeordnet sind.

23. Vorrichtung nach einem der vorhergehenden Ansprüche, **gekennzeichnet durch** eine erste und/oder zweite Verstelleinheit zum Einstellen der ersten und/oder zweiten Spaltbreite (H, h).

24. Vorrichtung nach einem der vorhergehenden Ansprüche, **dadurch gekennzeichnet, dass** die erste und/oder zweite Spaltbreite (H, h) so gewählt ist; dass sich im ersten und/oder zweiten Spalt (15, 42, 54, 69) für den Ultraschall zumindest zeitweise eine Resonanz ergibt.

25. Vorrichtung nach Anspruch 23 oder 24, **dadurch gekennzeichnet, dass** die erste und/oder zweite Spaltbreite (H, h) ein Vielfaches eines Viertels der Wellenlänge (λ/4) des Ultraschalls im Spalt (15, 42, 54, 69) beträgt, vorzugsweise eine halbe Wellenlänge oder ein Vielfaches davon.

26. Vorrichtung nach einem der vorhergehenden Ansprüche, **dadurch gekennzeichnet, dass** sich der erste und/oder zweite Bearbeitungsspalt (15, 42, 54, 69) zumindest im wesentlichen über die gesamte Bahnbreite erstreckt.

27. Vorrichtung nach Anspruch 26, **dadurch gekennzeichnet, dass** mittels der ersten Ultraschallschwingeinrichtung (16; 70, 71) die erste und zweite Ausgangsmaterialbahn (2, 3) und/oder mittels der zweiten Ultraschallschwingeinrichtung (43, 55) eine zumindest zweilagige Materialbahn, insbesondere bestehend aus der ersten und zweiten Ausgangsmaterialbahn (2, 3), mit der dritten Ausgangsmaterialbahn (4) großflächig kontinuierlich miteinander verbindbar ist oder in diskreten, über die gesamte Materialbahn verteilten Bereichen (80, 81) miteinander verbindbar ist.

28. Vorrichtung nach einem der vorhergehenden Ansprüche, **dadurch gekennzeichnet, dass** der dritten Zuführeinrichtung (40, 41; 52, 50) eine Auftrageinrichtung (47) zum Applizieren einer Flüssigkeit, insbesondere Wasser oder Wasser enthaltende Flüssigkeit auf die erste, zweite und/oder dritte Ausgangsmaterialbahn (2, 3, 3a, 4, 6a, 6) beigeordnet ist.

29. Vorrichtung nach Anspruch 28, **dadurch gekennzeichnet, dass** die Flüssigkeit ein Verbindungsmittel, vorzugsweise ein wasserlösliches Verbindungsmittel wie Stärke enthält.

30. Vorrichtung nach einem der vorhergehenden Ansprüche, **dadurch gekennzeichnet, dass** die erste und/oder dritte Ausgangsmaterialbahn (2, 4) eine Deckenbahn und die zweite Ausgangsmaterialbahn (3, 5) eine gewellte Bahn ist, vorzugsweise Papierbahnen zur Herstellung von Wellpappe.

31. Verwendung einer Vorrichtung gemäß einem der vorhergehenden Ansprüche zur Herstellung von Wellpappe.

32. Verwendung nach Anspruch 31, **dadurch gekennzeichnet, dass** zum Verbinden der ersten Deckbahn (2) und der Wellbahn (3) und/oder der zweiten Deckbahn (4) und der Wellbahn (3, 5) kein Verbindungsmittel, insbesondere kein Kleber, eingesetzt wird.

33. Verwendung einer Vorrichtung gemäß einem der vorhergehenden Ansprüche zur Herstellung einer Materialbahn, bei der die erste und zweite Ausgangsmaterialbahn Faserteilchen, insbesondere Zellulosefasern, enthält und/oder bei der die zweite und dritte Ausgangsmaterialbahn Faserteilchen, insbesondere Zellulosefasern, enthält.

34. Verwendung einer Vorrichtung gemäß Anspruch 33, wobei weder die erste und die zweite Ausgangsmaterialbahn und/oder weder die zweite und die dritte Ausgangsmaterialbahn thermoplastische Kunststoffbestandteile aufweisen.

35. Verfahren zum Verbinden einer mehrlagigen Materialbahn mittels Ultraschall,
- wobei zumindest eine erste, flächig ausgebildete und Fasern enthaltende Ausgangsmaterialbahn (2) und eine zweite flächig ausgebildete und Fasern enthaltende Ausgangsmaterialbahn (3, 3a) in einen ersten Spalt (15) einer Ultraschallschwingeinrichtung (16) zugeführt wird,
- und die zweite Ausgangsmaterialbahn (3) profiliert wird, wobei,
- Wasser auf die erste und/oder zweite Ausgangsmaterialbahn (2, 3, 3a, 4) appliziert wird,
- mittels einer Versorgungseinheit (20) der Ultraschallschwingeinrichtung (16) eine Leistung zugeführt wird, wodurch die zweite Ausgangsmaterialbahn (3) mit der ersten Ausgangsmaterialbahn (2) zu einer belastungsfähigen Leichtstruktur verbunden wird und
- die Leistung so gewählt wird, dass die Ultraschallschwingeinrichtung (16) ohne Zwischenschaltung eines die Ausgangsmaterialbahnen (2, 3) verbindenden Materials derart auf die Fasern enthaltenden Materialbahnen (2, 3) einwirkt, dass aneinanderliegende Grenzflächen der Materialbahnen (2, 3) durch Mikroverspleisung ihrer Fasern verbunden werden.

36. Verfahren nach dem vorherigen Anspruch, **dadurch gekennzeichnet, dass** die zweite, profilierte Ausgangsmaterialbahn (3) mittels einer zweiten Ultraschallschwingeinrichtung (43, 55) mit einer dritten Ausgangsmaterialbahn (4) verbunden wird.

37. Verfahren nach einem der vorherigen Ansprüche, **dadurch gekennzeichnet, dass** als erste und/oder zweite und/oder dritte Ausgangsmaterialbahn (2, 3, 4) Papier und/oder Pappe verwendet wird.

## Claims

1. A device for binding a multilayer material band using ultrasonic wave emissions
- in a first gap (15) between a first ultrasonic oscillator (16) and at least a first counter tool (10),
- with a first in-feed apparatus (12, 14) for the delivery of at least a first flat source material band (2) comprising fibres and
- a second in-feed apparatus (13, 10) for the delivery of a second flat source material band (3a) comprising fibers into the first gap (15)
wherein
- the second in-feed apparatus (13, 10) includes a profiled roll-pair (10, 11) for profiling the second source material band (3a),
- an application apparatus (18) for application of water onto the first and/or second source material band (2, 3a) is assigned to the first and/or second in-feed apparatus (12, 14; 13, 10),
- a generator unit (20) is assigned to the first ultrasonic oscillator (16) so that a power can be directed to the ultrasonic oscillator (16) which connects the second source material band (3a) with the first source material band (2) forming a durable, lightweight, structure,
- the power is selected such that the ultrasonic oscillator (16) effects on the material bands comprising fibres that bordering edges of the material bands join together by micro-splicing of their fibres without an intervening material bonding the source material bands (2, 3) together,
- the first ultrasonic oscillator (16) is arranged bordering on the first source material band (2) and the counter tool (10) is arranged bordering on the second source material band (3a), and
- a first profiled roll (10) of the profiled roll-pair acts as a counter tool.

2. A device according to claim 1, **characterized in that** the multilayer material band is corrugated cardboard.

3. A device according to claim 1, **characterized in that** the profiled roll-pair (10, 11) has two ridge and valley rollers.

4. A device according to claim 1 or 3, **characterized in that** the projections and the peaks (21) of the first profiled roll (10) possess an ultrasonic reflection surface or a coating equivalent thereto, which is especially so designed, that the surface reflects, at least partially, the ultrasonic emission back to the first ultrasonic oscillator (16).

5. A device according to one of the foregoing claims, **characterized in that** a first generator unit (20) is assigned to the first ultrasonic oscillator (16), with which a time-based, changeable power can be directed to the said first ultrasonic oscillator (16).

6. A device according to claim 5, **characterized in that** a pulse length (P) of the power modulation is synchronized with a pulse length (r) of the profile modulation of the second source material band (3) in the gap (15) and/or the gap width modulation (H), by means of the first profiled roll (10).

7. A device according to claim 6, **characterized in that** the first generator unit (20) yields a power maximum, when the profiled, second source material band (3) lies on the first source material band (2) and/or a peak of the first profiled roll (10) opposes the first ultrasonic oscillator (16).

8. A device according to one of the foregoing claims 5 to 7, **characterized in that** the first ultrasonic oscillator (16) can be excited by the first generator unit (20) to an ultrasonic emission, upon which a beat with the pulse length (P) and/or the gap width modulation (H) is superimposed.

9. A device according to one of the foregoing claims, **characterized by** a third in-feed apparatus (40, 41; 52, 50) especially on the side of the second source material band (3) for the guidance of a third, flat, source material band (4, 5a) into a second gap (42, 42a, 42b, 54).

10. A device according to claim 9, **characterized in that** the second gap (42, 42a, 42b, 54) is placed between a second ultrasonic oscillator (43, 55) and a second counter tool (44, 41, 48; 50) for the purpose of binding the material bands (2, 3; 5) with the third source material band (4, 6a, 5).

11. A device according to claim 10, **characterized in that** the second ultrasonic oscillator (43) is so placed as to be in immediate proximity to the third source material band (4) and the second counter tool (44) borders the first source material band (2).

12. A device according to one of the foregoing claims 10 or 11, **characterized in that** the second counter tool (44, 41, 48; 50) at least possesses one ultrasonic reflection surface, which at least partially reflects back the ultrasonic radiation to the second ultrasonic oscillator (43, 55).

13. A device according to claim 11, **characterized in that** at least one ultrasonic reflection surface is recessed in a bowl-like shape in the longitudinal and/or in a direction transverse direction of the band.

14. A device according to claim 12, **characterized in that** the at least one bowl-like depression (441, 211) is filled with a substance, that has a lesser ultrasonic reflectivity than does the material of the ultrasonic reflection surface.

15. A device according to one of the foregoing claims 10 to 14, **characterized in that** the second counter tool (41, 48, 50) is a third especially profiled roll.

16. A device according to claim 15, **characterized in that** the profile separating distance of the third roll (48) corresponds with a profile separating distance of the second profiled source material band (3) and/or the first profiled roll (10).

17. A device according to one of the foregoing claims 15 or 16, **characterized in that** the speed of rotation of the third roll (48) is synchronized in such a manner with the speed of the material band, that a peak of the third roll (48) makes contact on the first source material band (1) at the same moment as the second source material band (3) touches the third source material band (4).

18. A device according to one of the foregoing claims 10 to 17, **characterized in that** a second generator (45, 56) is assigned to the second ultrasonic oscillator (43, 55), whereby a time-based, changeable power can be transmitted to the second ultrasonic oscillator (43, 55).

19. A device according to claim 18, **characterized in that** the second generator (45, 56) yields a power maximum, when the profiled, second source material band (3) contacts the third source material band (4) and/or a projection (21) or a peak of the third profiled roll (48) oppositely confronts the second ultrasonic oscillator (43).

20. A device according to claim 18 or 19, **characterized in that** the second ultrasonic oscillator (43, 55) is excitable by means of the second generator (45, 56) to an ultrasonic emission, which a beat with a pulse length (P) and/or a gap width modulation (H) is superimposed upon.

21. A device according to one of the foregoing claims 9 to 20, **characterized by** a detecting apparatus (46) to scan the profile of the second source material band (3) before its entrance into the second gap (42, 54) and a synchronizing apparatus for the synchronizing of the time-related, modulated yield of power by the second generator (45, 56) and/or of the speed of rotation of the third profiled roll(48).

22. A device according to one of the foregoing claims 10 to 21, **characterized in that** the first and the second ultrasonic oscillator (70, 71) are arranged next to each other.

23. A device according to one of the foregoing claims, **characterized in that** a first and/or a second displacement apparatus for the adjustment of the width of the first and/or the second gap (H, h).

24. A device according to one of the foregoing claims, **characterized in that** the width (H, h) of the first and/or the second gap is so selected, that in the first and/or the second gap (15, 42, 54, 69) a resonance is created, at least temporarily, for the ultrasonic emissions.

25. A device according to claims 23 or 24, **characterized in that** the width (H, h) of the first and/or the second gap measures as a multiple of a quarter of the wave length (λ/4) of the ultrasonic sound in the gap (15, 42, 54, 69), this being preferably a half a wave length or a multiple thereof.

26. A device according to one of the foregoing claims, **characterized in that** the first and/or the second operational gap (15, 42, 54, 69) extends itself at least essentially over the entire band breadth.

27. A device according to claim 26, **characterized in that** by means of the first ultrasonic oscillator (16; 70, 71) the first and second source material band (2, 3) and/or by means of the second ultrasonic oscillator (43, 55) an at least two layered material band, especially consisting of the first and second source material band (2, 3), can be bound to the third source material band (4), wherein the binding of the said bands is of full area and continuous or may be in discrete, subdivided portions (80, 81) distributed over the entire material band area.

28. A device according to one of the foregoing claims, **characterized in that** an application apparatus (47) is assigned to the third in-feed apparatus (40, 41; 52, 50), for the application of a liquid, especially water, or a water containing liquid, on the first, second and/or the third source material band (2, 3, 3a, 4, 6a, 6).

29. A device according to claim 28, **characterized in that** the liquid contains a binding agent, advantageously a water soluble binding agent, such as starch.

30. A device according to one of the foregoing claims, **characterized in that** the first and/or the third source material band (2, 4) are respectively a cover band and the second source material band (3, 5) is respectively a profiled band, and are advantageously paper bands for the manufacture of corrugated cardboard.

31. The usage of a device according to one of the foregoing claims for the manufacture of corrugated cardboard.

32. The usage according to claims 31, **characterized in that** for the binding of the first cover band (2) and the corrugated band (3) and/or the second cover band (4) and the corrugated band (3, 5), no binding means, especially no adhesive, is added.

33. The usage of a device according to one of the foregoing claims to produce a material band, wherein the first and the second source material band contain of fibre particles, especially cellulose fibres, and/or wherein the second and the third source material band contain fibre particles, especially cellulose fibres.

34. The usage of a device according to claim 33, wherein neither the first nor the second source material band and/or neither the second nor the third source material band have thermoplastic synthetic components.

35. A process for the binding of a multilayer material band by means of ultrasonics,
- whereby at least a first, flat, source material band (2) comprising fibres and a second flat, source material band (3, 3a) comprising fibres are conducted into a first gap (15) of a ultrasonic oscillator (16),
- the second source material band (3) is profiled
wherein
- water is applied on the first and/or second source material band (2, 3, 3a, 4),
- power is supplied to the ultrasonic oscillator (16) by means of a generator unit (20), by which the second source material band (3) is bound to the first source material band (2) to form a durable lightweight structure, and
- the power is selected such that the ultrasonic oscillator (16) effects on the material bands (2, 3) comprising fibres that bordering edges of the material bands (2, 3) are joined together by micro-splicing of their fibres without an intervening material bonding the source material bands (2, 3) together.

36. A process according to the foregoing claim, **characterized in that** the second, profiled source material band (3), by means of a second ultrasonic oscillator (43, 55) is bound with a third source material band (4).

37. A process according to one of the foregoing claims, **characterized in that** paper and/or cardboard is used for the first and/or the second and/or the third source material band (2; 3; 4).

## Revendications

1. Dispositif d'assemblage par ultrason d'une bande de matériau multicouche
- dans une première fente (15) entre un premier dispositif oscillant à ultrason (16) et au moins un premier contre-outil (10),
- comportant un premier dispositif d'approvisionnement (12, 14) permettant de pourvoir au moins une première bande de matériau de départ (2) plane et comportant des fibres et
- un deuxième dispositif d'approvisionnement (13, 10) permettant de pourvoir dans la première fente (15) une deuxième bande de matériau de départ (3a) plane et comportant des fibres,
dans lequel
- le deuxième dispositif d'approvisionnement (13, 10) comporte une paire de rouleaux de profilage (10, 11) permettant de profiler la deuxième bande de matériau de départ (3a),
- le premier et/ou le deuxième dispositif d'approvisionnement (12, 14 ; 13, 10) sont associés à une dispositif d'application (18) permettant d'appliquer de l'eau sur la première ou la deuxième bande de matériau de départ (2, 3a),
- le dispositif oscillant à ultrason (16) est associé à une unité d'alimentation (20) permettant d'alimenter en puissance le dispositif oscillant à ultrason (16), celui-ci assemblant la deuxième bande de matériau de départ (3a) avec la première bande de matériau de départ (2) pour constituer une structure légère et résistante,
- la puissance est réglée pour que le dispositif oscillant à ultrason (16) agisse sur les bandes de matériau contenant des fibres de telle manière que les surfaces externes contiguës des bandes de matériau sont assemblées par micro-épissure de leurs fibres, y compris sans interposition d'un des matériaux joignant les bandes de matériau de départ (2, 3),
- le premier dispositif oscillant à ultrason (16) est agencé de façon contiguë à la première bande de matériau de départ (2) et le contre-outil (10) est agencé de façon contiguë à la deuxième bande de matériau de départ (3a), et
- un premier rouleau (10) de la paire de rouleaux de profilage fait office de contre-outil.

2. Dispositif selon la revendication 1, **caractérisé en ce que** la bande de matériau multicouche est une bande de carton ondulé.

3. Dispositif selon la revendication 1, **caractérisé en ce que** la paire de rouleaux de profilage (10, 11) comporte deux rouleaux ondulés.

4. Dispositif selon la revendication 1 ou 3, **caractérisé en ce que** les projections ou protubérances (21) du premier rouleau de profilage (10) comporte une surface ou un revêtement réfléchissant les ultrasons, ladite surface ou ledit revêtement étant conçu spécifiquement pour que les ultrasons soient réfléchis au moins partiellement vers le premier dispositif oscillant à ultrason (16).

5. Dispositif selon l'une quelconque des revendications précédentes, **caractérisé en ce que** le premier dispositif oscillant à ultrason (16) est associé à une première unité d'alimentation (20) permettant de fournir une puissance variable dans le temps au premier dispositif oscillant à ultrason (16).

6. Dispositif selon la revendication 5, **caractérisé en ce qu'**une période (P) de la modulation de puissance est synchronisée avec une période (r) de la modulation de profil de la deuxième bande de matériau de départ (3) dans la fente (15) et/ou **en ce que** la modulation de largeur de fente (H) est synchronisée par le premier rouleau de profilage (10).

7. Dispositif selon la revendication 6, **caractérisé en ce que** le premier dispositif d'alimentation (20) fournit une puissance maximale lorsque la deuxième bande de matériau de départ profilée (3) est appliquée sur la première bande de matériau de départ (2) et/ou lorsqu'une protubérance du premier rouleau de profilage (10) se trouve en face du premier dispositif oscillant à ultrason (16).

8. Dispositif selon l'une quelconque des revendications 5 à 7, **caractérisé en ce que** le premier dispositif oscillant à ultrason (16) peut être induit par la première unité d'alimentation (20) à émettre des ultrasons superposés en décalage par rapport à la période (P) et/ou à la modulation de largeur de fente (H).

9. Dispositif selon l'une quelconque des revendications précédentes, **caractérisé par** un troisième dispositif d'approvisionnement (40, 41 ; 52, 50) permettant d'approvisionner une troisième bande de matériau de départ plane (4, 5a), en particulier du côté de la deuxième bande de matériau de départ (3), dans une deuxième fente (42, 42a, 42b, 54).

10. Dispositif selon la revendication 9, **caractérisé en ce que** la deuxième fente (42, 42a, 42b, 54) est agencée entre un deuxième dispositif oscillant à ultrason (43, 55) et un deuxième contre-outil (44, 41, 48 ; 50) pour assembler la bande de matériau (2, 3 ; 5) à la troisième bande de matériau de départ (4, 6a, 5).

11. Dispositif selon la revendication 10, **caractérisé en ce que** le deuxième dispositif oscillant à ultrason (43) est contigu à la troisième bande de matériau de départ (4) et **en ce que** le deuxième contre-outil (44) est contigu à la première bande de matériau de départ (2).

12. Dispositif selon l'une quelconque des revendications 10 ou 11, **caractérisé en ce que** le deuxième contre-outil (44, 41, 48 ; 50) comporte au moins une surface réfléchissant les ultrasons qui réfléchit au moins partiellement les ultrasons vers le deuxième dispositif oscillant à ultrason (43, 55).

13. Dispositif selon la revendication 11, **caractérisé en ce qu'**au moins une surface réfléchissant les ultrasons est agencée sous forme d'une cuvette selon la direction de la bande et/ou perpendiculairement à celle-ci.

14. Dispositif selon la revendication 12, **caractérisé en ce qu'**au moins une cuvette (441, 211) est remplie d'un matériau présentant une réflectivité aux infrasons inférieure à celle du matériau de la surface réfléchissant les ultrasons.

15. Dispositif selon l'une quelconque des revendications 10 à 14, **caractérisé en ce que** le deuxième contre-outil (41, 48, 50) est un troisième rouleau, soit en particulier un rouleau profilé.

16. Dispositif selon la revendication 15, **caractérisé en ce que** l'espacement du profil du troisième rouleau (48) correspond à un espacement du profil de la deuxième bande de matériau de départ profilé (3) et/ou du premier rouleau de profilage (10).

17. Dispositif selon l'une quelconque des revendications 15 ou 16, **caractérisé en ce que** la vitesse de rotation du troisième rouleau (48) est synchronisée de telle façon avec la vitesse de la bande de matériau qu'une protubérance du troisième rouleau (48) est alors contiguë à la première bande de matériau de départ (1) lorsque la deuxième bande de matériau de départ (3) est contiguë à la troisième bande de matériau de départ (4).

18. Dispositif selon l'une quelconque des revendications 10 à 17, **caractérisé en ce que** le deuxième dispositif oscillant à ultrason (43, 55) est associé à un deuxième dispositif d'alimentation (45, 56) permettant de fournir une puissance d'alimentation variable dans le temps au deuxième dispositif oscillant à ultrason (43, 55).

19. Dispositif selon la revendication 18, **caractérisé en ce que** le deuxième dispositif d'alimentation (45, 56) délivre un maximum de puissance lorsque la deuxième bande de matériau de départ profilée (3) est contiguë à la troisième bande de matériau de départ (4) et/ou lorsqu'une projection (21) ou une protubérance du troisième rouleau de profilage (48) se trouve en face du deuxième dispositif oscillant à ultrason (43).

20. Dispositif selon la revendication 18 ou 19, **caractérisé en ce que** le deuxième dispositif oscillant à ultrason (43, 55) peut être induit par le deuxième dispositif d'alimentation (45, 56) à émettre des ultrasons superposés en décalage par rapport à la période (P) et/ou à la modulation de largeur de fente (H).

21. Dispositif selon l'une quelconque des revendications 9 à 20, **caractérisé par** un dispositif d'acquisition (46) permettant de balayer le profil de la deuxième bande de matériau de départ (3) avant d'entrer dans la deuxième fente (42, 54) et par un dispositif de synchronisation permettant de synchroniser l'alimentation de puissance modulable dans le temps par le deuxième dispositif d'alimentation (45, 56) et/ou par la rotation du troisième rouleau de profilage (48).

22. Dispositif selon l'une quelconque des revendications 10 à 21, **caractérisé en ce que** le premier et le deuxième dispositif oscillant à ultrason (70, 71) sont agencés de manière contiguë.

23. Dispositif selon l'une quelconque des revendications précédentes, **caractérisé par** une première et/ou une seconde unité de réglage permettant de régler la première ou la deuxième largeur de fente (H, h).

24. Dispositif selon l'une quelconque des revendications précédentes, **caractérisé en ce que** la première et/ou la deuxième largeur de fente (H, h) sont sélectionnées de telle sorte qu'une résonance des ultrasons se produit au moins temporairement dans la première ou la deuxième fente (15, 42, 54, 69).

25. Dispositif selon la revendication 23 ou 24, **caractérisé en ce que** la première et/ou la deuxième largeur de fente (H, h) équivalent à un multiple du quart de la longueur d'onde (λ/4) de l'ultrason présent dans la fente (15, 42, 54, 69), soit préférablement une demi longueur d'onde ou un multiple de cette valeur.

26. Dispositif selon l'une quelconque des revendications précédentes, **caractérisé en ce que** la première et/ou la deuxième fente de traitement (15, 42, 54, 69) s'étendent au moins en grande partie sur toute la largeur de la bande.

27. Dispositif selon la revendication 26, **caractérisé en ce que** la première et la deuxième bande de matériau de départ (2, 3) peuvent être assemblées au moyen du premier dispositif oscillant à ultrason (16 ; 70, 71) et/ou **en ce qu'**une bande de matériau à au moins deux couches, constituée en particulier par la première et la deuxième bande de matériau de départ (2, 3), peut être assemblée au moyen du deuxième dispositif oscillant à ultrason (43, 55), l'assemblage étant effectué avec la troisième bande de matériau de départ (4) de façon continue et sur une grande surface entre les bandes ou sur des portions discrètes de celles-ci (80, 81) réparties sur toute la bande de matériau.

28. Dispositif selon l'une quelconque des revendications précédentes, **caractérisé en ce que** le troisième dispositif d'approvisionnement (40, 41 ; 52, 50) est associé à un dispositif d'application (47) permettant d'appliquer un liquide, soit en particulier de l'eau ou un liquide comportant de l'eau, sur la première, la deuxième et/ou la troisième bande de matériau de départ (2, 3, 3a, 4, 6a, 6).

29. Dispositif selon la revendication 28, **caractérisé en ce que** le liquide comporte un moyen d'assemblage, soit de préférence un produit soluble dans l'eau tel que de l'amidon.

30. Dispositif selon l'une quelconque des revendications précédentes, **caractérisé en ce que** la première et/ou la troisième bande de matériau de départ (2, 4) sont des bandes de recouvrement et **en ce que** la deuxième bande de matériau de départ (3, 5) est une bande ondulée, s'agissant de préférence de bandes de papier destinées à produire du carton ondulé.

31. Application d'un dispositif selon l'une quelconque des revendications précédentes pour la fabrication de carton ondulé.

32. Application selon la revendication 31, **caractérisée en ce qu'**aucun moyen d'assemblage, en particulier aucun adhésif, n'est utilisé pour assembler la première bande de recouvrement (2) et la couche ondulée (3) et/ou la deuxième bande de recouvrement (4) et la bande ondulée (3, 5).

33. Application d'un dispositif selon l'une quelconque des revendications précédentes pour la fabrication d'une bande de matériau, dans laquelle la première et la deuxième bande de matériau de départ comporte des particules fibreuses, soit en particulier des fibres de cellulose, et/ou dans laquelle la deuxième et la troisième bande de matériau de départ comportent des particules fibreuses, soit en particulier des fibres de cellulose.

34. Application d'un dispositif selon la revendication 33, dans laquelle la première et la deuxième bande de matériau de départ et/ou la deuxième et la troisième bande de matériau de départ, comportent des composants synthétiques thermoplastiques.

35. Procédé d'assemblage par ultrason d'une bande de matériau multicouche
- dans lequel au moins une première bande de matériau de départ (2) plane et contenant des fibres et une deuxième bande de matériau de départ (3, 3a) plane et contenant des fibres sont conduites à travers une première fente (15) d'un dispositif oscillant à ultrason (16),
- et dans lequel la deuxième bande de matériau de départ (3) est profilée,
dans lequel
- de l'eau est appliquée sur la première et/ou la deuxième bande de matériau de départ (2, 3, 3a, 4),
- une puissance d'alimentation est fournie au dispositif oscillant à ultrason (16) par une unité d'alimentation (20), moyennant quoi la deuxième bande de matériau de départ (3) est assemblée avec la première bande de matériau de départ (2) pour constituer une structure légère et résistante,
- la puissance est réglée pour que le dispositif oscillant à ultrason (16) agisse sans interposition d'un des matériaux joignant les bandes de matériau de départ (2, 3) sur les bandes de matériau contenant des fibres (2, 3) de telle manière que les surfaces externes contiguës des bandes de matériau (2, 3) sont assemblées par micro-épissure de leurs fibres.

36. Procédé selon la revendication précédente **caractérisé en ce que** la deuxième bande de matériau de départ profilée (3) est assemblée au moyen d'un deuxième dispositif oscillant à ultrason (43, 55) avec une troisième bande de matériau de départ (4).

37. Procédé selon l'une quelconque des revendications précédentes, **caractérisé en ce que** du papier et/ou du carton sont utilisés comme première, deuxième et/ou troisième bande de matériau de départ (2; 3; 4).
